# EUROPEAN PATENT APPLICATION

(11) **EP 3 453 357 A1**
(43) Date of publication of application: **13.03.2019**
(21) Application number: 17190086.3
(22) Date of filing: 08.09.2017
(51) Int. Cl.: A61C 8/00

(54) **DENTAL IMPLANT**

(71) Applicant: Drs. Bettens - De Pooter BVBA, 9831 Deurle (BE)
(72) Inventor: BETTENS, Rolf, 9831 Deurle (BE)
(74) Representative: Brantsandpatents bvba

(57) **Abstract**

The current invention concerns an improved dental implant, and in a more specific form, the invention provides an improved dental implant for fixation in the pterygoid bone structure.

## Description

### Technical field

The invention pertains to the technical field of dental implants. Specifically, the dental implant described herein may be of particular advantage in the field of dental implants placed through the maxillary sinus taking anchorage in a neighboring bony structure (e.g. the pterygoid process of the sphenoid bone or the lateral nasal wall or zygomatic bone, ...), and more particular in the field of pterygoid dental implants.

### Background

There remains a need in the art for an improved dental implant, especially for use in 'blind' procedures, such as pterygoid implants, though the application of the invention is by no means limited thereto.

The applicant noticed a particular default in all commonly used dental implants for specific implantation traversing through the sinus cavity. One example herein have a structure of two extremal zones with screw thread to anchor the implant in osseous structures, one in the crestal bone of the jaw, the other, the deepest, in the zygomatic bone structure. These two zones are separated by a smooth zone that extends through the sinus cavity when the implant is placed.

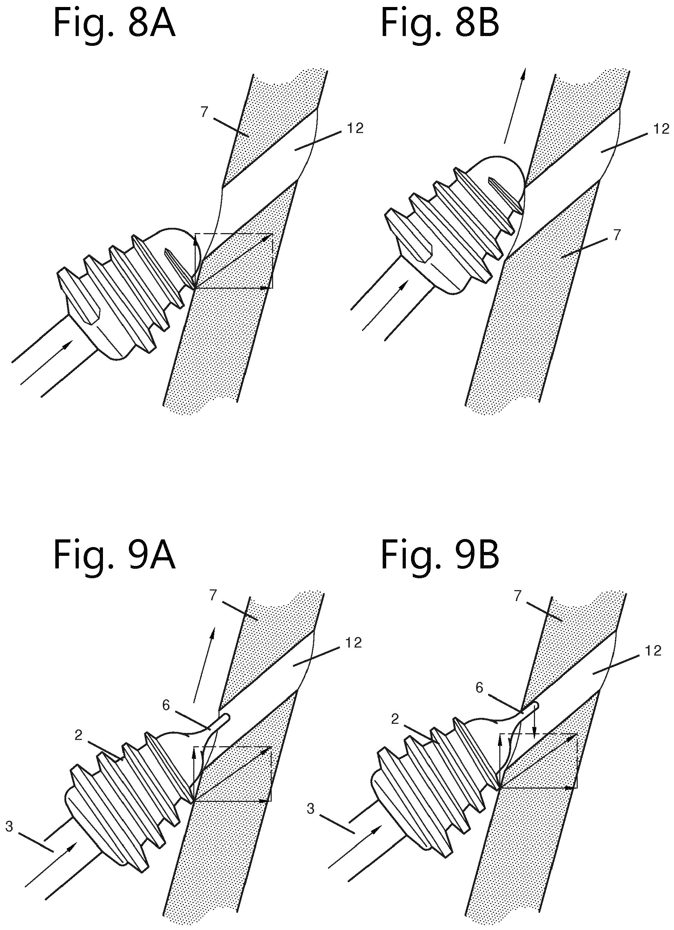

The problems encountered during the placement of trans-sinus dental implants relate to the difficulty of placing a screw-type device into a predrilled undersized osteotomy on an angulated surface (the neighboring bone structure) in a blind procedure. More in particular the applicant noticed that during trans-sinus pterygoid implant placement the pterygoid implant -which is inherently an angulated implant- had the tendency of sliding up against the posterior wall of the maxillary sinus due to the upward vector component of the insertion force (see Figures 8A, 8B). Consequently, the implant ends up in the maxillary sinus instead of penetrating the posterior sinus wall through the predrilled osteotomy to find anchorage in the pterygoid process of the sphenoid bone.

The tip of the implants of the prior art are not suitable for allowing the user to easily find the deepest osteotomy. Considering that this osteotomy is obscured from the view of the user (as the deepest osteotomy is in the zygomatic bone or in the lateral nasal wall or in the pterygoid bone structure), this is the hardest part during the procedure. The shape of the tip is of paramount importance: if it is too sharp, the implant might become self-drilling allowing penetration of the apex of the implant in another area than the osteotomy, leading to malpositioning of the implant. Furthermore, a sharp pinpoint tip of the implant can damage neighboring structures, such as blood vessels or bone. If however the tip is too round, the implant will have the tendency of sliding up the angulated surface, passing the osteotomy as described above. The osteotomy cannot be made larger as this would compromise the primary stability of the implant.

Additionally, should another indentation in said bone structures be accidentally found by the user, he or she could very well try to tap the implant in the wrong place, damaging the bone structure, which is quite fragile in these zones, and causing great discomfort to the patient. Damage to the bone structure could be especially disadvantageous as it could jeopardize the stability of the entire bone structure as a load-bearing structure for the implant.

Furthermore, it is to be noted that the applicant has not found any dental implants specifically suited for use as a trans-sinus pterygoid implant, but only for trans-sinus zygomatic implants placed with an open approach. Due to the peculiarities of the pterygoid bone structure as well as the intrinsically different positioning and orientation, and the use of a closed (blind) technique, it is clear that this will require a different approach.

The present invention aims to resolve at least some of the problems mentioned above.

### Summary of the invention

The present invention provides a dental implant comprising an elongate shaft comprising a first and a second end, whereby the first end is adapted for receiving an abutment head or prosthetic work-pieces. The shaft optionally comprises a first zone provided with anchoring means for anchoring in a bone structure, said first zone extending substantially around the shaft near the first end, and furthermore said shaft optionally comprising a second zone provided with screw thread at the second end for endosseous placement, and whereby said second zone with screw thread and said first zone with anchoring means are separated by an intermediate zone with an essentially relatively smooth surface and/or reduced diameter for extraosseous placement. The shaft of the implant furthermore comprises a pilot tip on the second end, which pilot tip comprises a narrow distal edge, said edge being formed by at least one substantially flat plane of the pilot tip with said at least one plane being essentially parallel to the elongate shaft. Preferably said pilot tip extends over at least 0.2 mm from said second end. Typically however, the pilot tip will extend over at least 0.5 mm, or even 1.0 mm or more, such as 1.1 mm, 1.2 mm, 1.3 mm, 1.4 mm, 1.5 mm, 1.6 mm, 1.8 mm, 2.0 mm or even more than that.

Alternatively, the pilot tip may be an elongate continuation of the second end with a smaller radius (or a radius at most equal to the radius of the second end without screw thread).

In a further aspect, the present invention provides a dental implant for pterygoid implantation, designed to abridge the sinus cavity and be anchored in the pterygoid bone structure with the distal end of the dental implant.

### Description of figures

**Figure 1 and 2** show a possible embodiment of the dental implant according to the invention in different perspectives.
**Figure 3A, 3B, 3C and 3D** shows a number of embodiments of the pilot tip for a dental implant, according to the invention, from a first perspective.
**Figure 4A and 4B** shows a number of embodiments of the pilot tip for a dental implant, according to the invention, from a second perspective perpendicular to the first perspective.
**Figure 5A, 5B, and 6A and 6B** show an embodiment of the dental implant according to the invention being inserted into an osteotomy.
**Figures 7A and 7B** show the positioning of an embodiment of the dental implant according to the invention as a pterygoid implant and lateral nasal wall implant.
**Figures 8A and 8B** show part of a prior art dental implant being used in an implant procedure, marking the disadvantages.
**Figures 9A and 9B** show part of a dental implant according to an embodiment of the invention, being used in an implant procedure comparable to Figures 8A and 8B.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The term "deepest bone structure" or "second bone structure" refers to an underlying bone structure, in which the dental implant is anchored. Typically, this will be either the zygomatic bone or the lateral nasal wall or the pterygoid bone, although other such structures may also be used for anchoring the implant. Often this will be obscured from the practitioner during the implantation of the dental implant by the first bone structure (typically the jawbone) and/or tissue.

The term "first bone structure" or "most shallow bone structure" refers to a crestal bone structure, typically the maxillary jaw bone, and in which the dental implant will be additionally anchored. An osteotomy will be made entirely through this first bone structure, reaching to the sinus cavity, and the dental implant will be led entirely through said first bone structure.

The term "deepest osteotomy" or "second osteotomy" is the osteotomy created in the deepest bone structure, being the zygomatic or pterygoid bone or the lateral nasal wall (or others in some cases).

The term "first osteotomy" or "most shallow osteotomy" is the osteotomy created in the first bone structure, the maxillary jaw bone typically, and typically extends entirely through said bone structure having an opening at both ends, and leading to the sinus cavity.

The recitation of numerical ranges by endpoints includes all numbers and fractions subsumed within that range, as well as the recited endpoints.

The present invention concerns a dental implant comprising an elongate shaft comprising a first and a second end, whereby the first end is adapted for receiving an abutment head or prosthetic work-pieces, said shaft comprising at least one zone with a screw thread for endosseous anchoring, whereby the shaft comprises a pilot tip on the second end, which pilot tip comprises a distal edge, preferably narrow, said edge being formed by at least one substantially flat plane of the pilot tip with said at least one plane being essentially parallel to the elongate shaft. Preferably said pilot tip extends over at least 0.2 mm from said second end, more preferably over at least 0.3 mm, even more preferably over at least 0.4 mm or even more over at least 0.5 mm.

Note that the implant may already be provided with an abutment head on the first end, ready to receive a prosthetic work-piece.

In a slightly varying embodiment, the dental implant of the invention comprises an elongate shaft comprising a first and a second end, whereby the first end is adapted for receiving an abutment head or prosthetic work-pieces (with the same note as above), said shaft comprising at least one zone with a screw thread for endosseous anchoring, and whereby the shaft comprises an elongate, preferably cylindrical or truncated conical, pilot tip on the second end, extending over at least 0.2 mm, preferably over at least 0.3 mm, more preferably over at least 0.4 mm or even more preferably over at least 0.5 mm, from said second end essentially parallel to the elongate shaft, and whereby said pilot tip has a radius of at most 100% of the inner radius of the second zone, preferably with a thickness of at most 80% of the inner radius of the second zone, more preferably of at most 65% of the inner radius of the second zone and even more preferably at most 55% of the inner radius of the second zone. The 'inner radius' refers to the radius without considering the screw thread.

Typically however, the pilot tip will extend further to ensure proper insertion into the deepest osteotomy, and will extend over at least 0.8 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.2 mm, 2.4 mm or even more. It is to be noted that this length depends greatly on other parameters of the implant, such as the shape and width of the second end, especially towards its distal end. Furthermore, this length depends on the specific application, whether it is a zygomatic, pterygoid or nasal wall implant for instance. The adaptation applies to both of the embodiments above.

The most important aspect in which this dental implant differs from what exists today, especially when used as pterygoid or zygomatic implants or lateral nasal wall implants (thus with two anchoring zones as will be discussed later), is that it ensures that the implant tip can be screwed in to the deepest osteotomy under a non-perpendicular angle with respect to the bone structure in which it is to be anchored. It is to be understood that osteotomies are drilled much narrower than the implants to be embedded therein, to ensure a strong anchoring. The ratio of radii between the implant and the actually drilled osteotomy can easily be a factor 1.5. When screwing the implant non-perpendicularly into the bone structure, this will cause the tip of the implant to undergo additional forces, pushing it further (upwards in this case) away from the osteotomy. The implant of the applicant, and specifically the protruding pilot tip, projects out far enough to be inserted into the osteotomy before the implant is to be screwed in, and thus serves as a lever of a kind, ensuring the implant cannot leave the intended path. The applicant has noticed that this was an important issue with the prior art dental implants, none of which are suitable for non-perpendicular screwing-in. In the technical field, non-perpendicular implants are usually placed by first moving the dental implant in perpendicularly, and already screwing somewhat to entrench it, followed by the tilting of the implant after which it is screwed in all the way. This may be an option in some cases, notwithstanding the unnecessary damage this does to the bone, but in blind procedures, such as pterygoid, lateral nasal wall and zygomatic implants, this is simply impossible, as there are two osteotomies to traverse, which does not allow the implant to be brought in perpendicularly at first as it cannot be tilted to achieve the desired angulation afterwards. Said solution is expertly shown in Figures 8A-B and 9A-B, more succinctly by the differences therein between.

By providing a projecting pilot tip of sufficient length, this problem is aptly solved. Furthermore, the applicant has noticed that the pilot tip preferably broadens in one dimension towards the second end of the dental implant, giving it the appearance of a spear tip from a superior view, to protect tissue and arteries lying behind the bone structure of the second osteotomy (as opposed to a needle- or pin-like pilot tip). However, it is to be noted that in the most preferred embodiment, the spear tip is provided with a rounded protuberance at its extremal end to dull the point, and serving as a smooth surface to contact the bone structure as the dental implant explores its surface in search of the deepest osteotomy.

In a preferred embodiment, the invention concerns a dental implant comprising an elongate shaft comprising a first and a second end, whereby the first end is adapted for receiving an abutment head or prosthetic work-pieces (with the same note as earlier), the shaft comprising a first zone provided with anchoring means for anchoring in a bone structure, said first zone extending substantially around the shaft near the first end, and furthermore comprising a second zone provided with screw thread at the second end for endosseous placement, and whereby said second zone with screw thread and said first zone with anchoring means are separated by an intermediate zone with an essentially smooth surface for extraosseous placement. The shaft of the implant furthermore comprises a pilot tip on the second end, which pilot tip comprises a (narrow) distal edge, said edge being formed by at least one substantially flat plane of the pilot tip with said at least one plane being essentially parallel to the elongate shaft. Preferably, the elongate shaft itself is essentially radially symmetrical, aside from possible screw threads or anchoring means and smaller elements or details. Most preferably, the distal edge is rounded so the edge may easily slide over bone structures it is pressed up against.

It is to be noted that the elongate shaft of the slightly varying embodiment of the dental implant may comprise a first zone provided with anchoring means, preferably screw thread and/or surface enhancement, for anchoring in a bone structure, whereby said shaft furthermore comprises a second zone provided with screw thread at the second end for endosseous anchoring, said first zone extending substantially around the shaft near the first end, and whereby said second zone with screw thread and said first zone with anchoring means are separated by an intermediate zone with an essentially smooth surface for extraosseous placement.

With the term "surface enhancement", we refer to the roughening of the surface of the implant, typically made of titanium or zirconium. A number of techniques exist to accomplish this enhancement, for instance sandblasting with large grit & acid-etching, or providing a titanium oxide layer. Most surfaces of the implants are moderately rough surface as this has been found to positively influence osseo-integration in comparison to machined surfaces.

As the applicant has observed during procedures, all of the existing tools and dental implants are inadequate when dealing with 'blind' procedures, in which an osteotomy is made in an underlying bone structure of which the visibility is obscured, for instance by flesh, muscle and/or (other) bone structures, referred to as the first bone structure in this document, or most shallow bone structure. It is entirely up to the user, a medical or dental practitioner, to find the correct path to the second osteotomy by guessing this based on his experience and knowledge of the human body. However, the applicant notes that especially when dealing with cranial bone structures, more so of the jaw, there is a non-negligible variation amongst patients. Add to this the important of meticulous positioning given the delicate location of the procedures, it is clear that blindly guessing the correct path to find the internal osteotomy in which the implant is to be led, is not a trustworthy option. This is especially so considering the patient's point of view, who wishes a correct procedure with minimal chance of side-effects, such as damage to the bones, muscles or tissue, and ensuing hemorrhages or pain. As there is no practical (cheap and easy) way to visualize the underlying bone structure with the osteotomy, a different approach (e.g. an open approach with much higher morbidity) thus would need to be sought.

It is in this light that the applicant proposes the improved dental implant according to the invention, which has adapted the distal end (the end that will be entrenched in the deepest osteotomy) to better allow the user to search and find the osteotomy, and having found the osteotomy, to correctly insert the implant therein. When considering the latter remark, the applicant wishes to note that many existing dental implants have the tendency to damage the deepest bone structure when anchoring the implant in the deepest osteotomy. If the tip of the implant does not find the osteotomy correctly, the practitioner will typically start screwing in (or other types of anchoring) the implant which will damage the osteotomy, and will not allow the implant to align with the osteotomy's central axis correctly. Additionally, such an approach is less than ideal in situations where the bone structure is already quite fragile, and further damage can severely reduce the stability as an anchoring point.

It is to address these issues that the applicant has adapted the distal end of the implant, to improve the tactile experience for the practitioner, aided by the fact that the relatively smooth part of the implant shaft is positioned in the first osteotomy, giving freedom and tactile feed-back to the surgeon, as well as to ensure that the central axis of the dental implant lines up with the central axis of the deepest osteotomy before the action of screwing in the implant is started, thus ensuring a correct positioning of the dental implant. As the person skilled in the art would easily comprehend, it is absolutely crucial that the anchoring position in the deepest bone structure, at the distal end, is as planned and predrilled, since this will influence both position and orientation of the dental implant abutment head upon which the new prosthetic crown will be placed.

When placing said dental implants, the practitioner leads the dental implant with its second end first through a first osteotomy in a crestal bone structure, then traverses the sinus cavity, preferably whereby the first zone (at the first end) does not yet enter the first osteotomy. At this point, the practitioner has the option of pivoting the dental implant around the first osteotomy to find the second, deepest osteotomy in the deeper bone structure (pterygoid bone or lateral nasal wall or zygomatic bone) with its tip. Considering the structure of the skull, and specifically, the orientation of the deeper bone structures, the implant will touch the deeper bone structure generally under an angle of about 45° with the surface of said bone structure (of course with the necessary variations). We refer to the Figures of this document, as they will assist in understanding the practical benefits of the invention when compared to the prior art. Prior art dental implants have a dome shaped or straight tip ending abruptly and a straight or tapered shaft with a relatively large diameter and threaded surface. This precludes the surgeon from reassuring that he or she has found the correct entrance to the osteotomy. Even in the event that the entrance is correct, the contact of the relatively broad threaded rotating shaft at the first osteotomy causes wobbling of the implant tip in the second osteotomy, thereby damaging the delicate bone of the second bone structure. With the improved implant the shaft is relatively narrow and smooth at the first osteotomy, which avoids wobbling and which allows the surgeon the freedom to move the implant tip upwards and downwards along the surface of the second bone structure (e.g. the posterior wall of the maxillary sinus) searching for the second osteotomy.

The main improvement here is however the fact that the pilot tip is defined by the at least plane that is parallel to the central axis and said plane culminating in the distal edge of the pilot tip. By narrowing the implant tip down to an edge on lateral view, the chances of a premature contact (the posterior part of a rounded or flat tip will touch the posterior wall of the sinus first, thereby triggering an upward reactive force on the implant) will be greatly diminished, allowing the edge of the tip to enter the second osteotomy before the posterior part of the second end touches the posterior sinus wall. The distal edge of the pilot tip will be the first contact of the dental implant against the deepest bone structure (delimiting the sinus cavity). The dental implant will be manipulated into the jaw structure of the patient so the parallel plane faces downwards (of course under an angle of about 45° still).

The choice for an edge at the distal end (instead of a rounded end section) further aids in this aspect, as this means there will be a greatly reduced chance of the dental implant accidentally sliding further upwards should it move upwards a bit too far, and be pressed against the upper edge of the deepest osteotomy. Given the angle of 45° that the bone structure makes with the axis of the implant, this would mean for implants with rounded end sections that they could slide further upwards by the force exerted by the practitioner and the counterforce of the bone structure. By having an actual edge, and especially with a narrow edge, this will be avoided, as the upper edge of the deepest osteotomy will press against the upper plane defining the edge, thus pushing the dental implant downward and into the osteotomy. This will also cause the implant to be positioned more centrally in the osteotomy.

Furthermore, it is important for the practitioner to get a good feel when the dental implant has reached a sufficient depth of insertion into the deepest osteotomy, as this means he or she can begin screwing the implant into the bone structure. Starting to screw the implant in too soon without proper alignment of the implant within the deepest osteotomy, could lead to unwanted destruction of the bone, or to anchoring the implant in an incorrect position. The applicant therefore provides an implant which has a distinguishable difference between the pilot tip and the second zone with screw thread, in particular a marked difference in 'radius' or distance to the central axis. This will cause the practitioner to feel when proceeding to insert the implant further into the deepest osteotomy, with the pilot tip beyond the lower edge of the deepest osteotomy. This will be felt as a resistance and/or a small (and/or gradual) shift of the implant by the practitioner, who in this way is alerted that the implant is in position to be screwed into the deepest bone structure.

Lastly, it should be mentioned here that pterygoid implants offer clear benefits to the patient when compared to zygomatic implants (less morbidity, less complications, better prosthetic position, no need for general anesthesia or sedation,...) The trans-sinus pterygoid approach allows an improved prosthetic position in comparison to the conventional pterygoid approach. In this conventional pterygoid approach the implant is positioned too posteriorly in the dental arch at the position of the wisdom tooth instead of the position of the second molar.

In a preferred embodiment of the invention, the shaft extends along a central axis, whereby at least part of the at least one plane lies substantially closer to the central axis than any part of the second zone lies to the central axis.

Preferably, the transition of the second zone to the pilot tip, and specifically to the at least one plane defining the distal edge of the pilot tip, is continuous. The transition can however be gradual or slightly more abrupt (comparable to a first, second, third degree function versus a smoothed step-function). More preferably, the transition is rather abrupt, but smooth, so the user may feel a noticeable tactile experience when the implant is inserted into the deepest osteotomy deep enough so the transition reaches the lower edge of the deepest osteotomy, resulting in a shift and/or resistance being felt, signifying that the implant has reached the desired position and can be fastened via the screw thread into the deepest bone structure.

In a preferred embodiment of the invention, the pilot tip is connected to the second zone via a transition zone which gradually diverges to the radius of the second zone at least on the side of the flat plane. The applicant noticed that abrupt transitions (especially when the form no longer is according to a differentiable function), and even more so with transitions with an actual angle higher than 60°, 75° or even up to 90°, are less desirable, as this could cause the dental implant to jump and lose its position. Smaller angles may still be allowable, as the transition can still be smooth.

In a preferred embodiment of the invention, the anchoring means of the second and/or first zone comprise screw thread. It is however possible to use different anchoring means, such as etched resistances, barbs, etc. to entrench the dental implant in the bone structure.

In a preferred embodiment of the invention, the narrow distal edge of the pilot tip is laterally broadened to form a chisel-like structure.

In an even further preferred embodiment of the invention, the pilot tip comprises sharp lateral edges adapted for cutting into osseous structures.

The applicant noticed that, when placing the implant into an osteotomy in the deepest bone structure, the osteotomy is often not yet perfectly suited to receive the implant. This can either be remedied by retracting the implant and attempting to redrill the osteotomy which is not advisable, given the danger of excess damage, of incorrect positioning of the drill and so on. Alternatively, this can be solved by 'forcing' the implant into the osteotomy, thereby destroying the obstructing pieces of bone by force. However, this also comes with considerable danger of excessive damage, and danger for the stability of the bone structure (especially so when dealing with the fragile pterygoid bone structure) since the tips of the dental implants are not adapted for this purpose. Furthermore it is well-known in the literature that excessive pressure on the bone walls can lead to impairment of the osseo-integration process and even osteonecrosis. It is thus with brute force the practitioner will destroy the resisting pieces of bone in order to create the desired osteotomy.

The applicant intends to solve this problem by adapting the leading pilot tip of the improved dental implant with lateral sharp edges for cutting into the osseous structures with more ease. This way, it is no longer a case of brute force, and instead of destroying the bone structures, they can be chipped away by pivoting the dental implant, moving its distal end laterally to cut into resisting bone structure. The advantage is that the sharp edges on themselves are too weak to enlarge the general osteotomy (so there is no danger of excessive bone removal), but are capable of removing small extruding portions of bone that would hinder the passage of the dental implant into the osteotomy; while doing so the surgeon is assured that the cutting instrument is perfectly aligned in the osteotomy, which would not be the case if he or she would back out the implant and redrill the second osteotomy.

In a preferred embodiment of the invention, the narrow distal edge of the pilot tip is blunted, preferably rounded. This is to minimize damage done with the distal edge, to protect the (deepest) bone structure as well as tissue (e.g. in the fossa pterygoidea in the case of a pterygoid implant), and furthermore, to allow the practitioner to move the distal edge fluently over the deepest bone structure when searching for the deepest osteotomy. Once the second osteotomy is reached the narrow blunted projection will fall in the osteotomy, thereby activating the distal edge to resist further cranial movement of the tip.

In a preferred embodiment of the invention, the narrow distal edge is further defined by a second plane of the pilot tip, with said second plane being essentially parallel to the elongate shaft, and joining said first plane at the distal edge.

To further emphasize this point, we would refer to the Figures 8A, 8B and 9A, 9B, which expertly show the advantages of this specific embodiment over the prior art. When the practitioner searches for the deepest osteotomy with a dental implant according to the prior art (lacking a specifically developed pilot tip), the end of the dental implant tends to 'miss' or skim over the deepest osteotomy, amongst others because of the angle of approach being rather small and the tip being broad. Add to this the screw thread of the apical end of the dental implant (again, referring to Figures 8A and 8B), which creates even more distance between the implant and the bone structure, and one can easily understand how the tip of the prior art implants will tend to move over the osteotomy. The practitioner exerts a force on the dental implant along its central axis, of which only a tangential component remains as the bone structure 'pushes back', causing the dental implant to slide upwards. Prior art embodiments do not take into account the angle of approach to the osteotomy of the implant on the bone structure, resulting in an implant that practitioners will face problems with for the purpose of such pterygoid implant procedures.

The pilot tip of the implant in Figures 9A and 9B extends from the broader end of the implant, which broader end serves for the anchoring (via screw thread in this case), and projects from the broader end sufficiently to find and enter the osteotomy before the broadened end passes the opening.

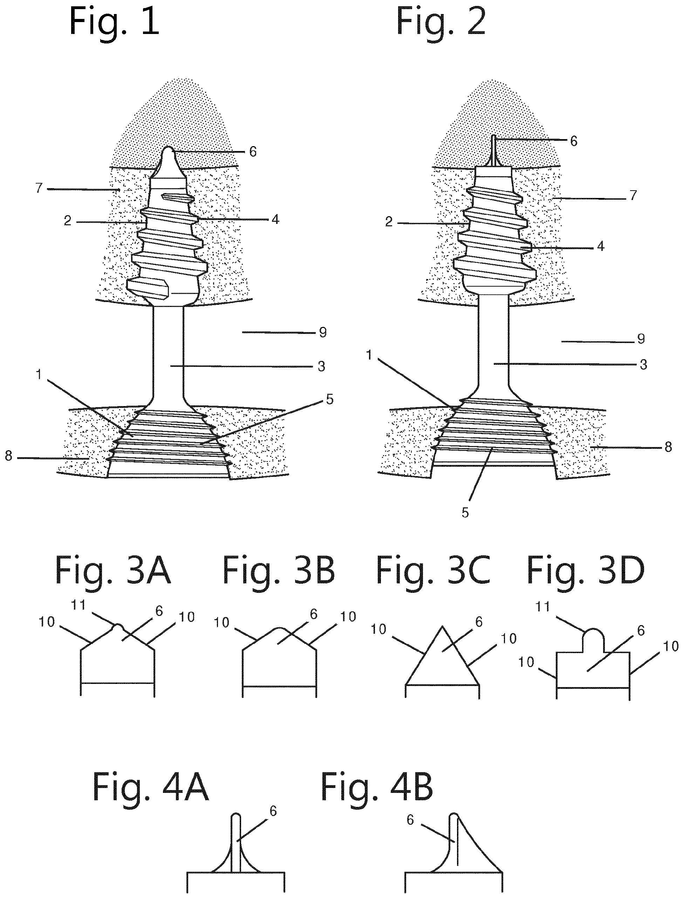

Note however that this advantage would also apply to the more general embodiment of the dental implant as well, due to the pilot tip being present and comprising the first plane parallel to the central axis of the dental implant, allowing the pilot tip to enter the osteotomy, thereby making sure the implant does not miss the opening. A number of possible embodiments for the pilot tip are shown in Figures 3A-3D and 4A-4B.

In an alternatively preferred embodiment of the invention, the narrow distal edge is further defined by a second plane of the pilot tip, with said second plane being obliquely positioned with respect to the elongate shaft, and joining said first plane at the distal edge.

In a preferred embodiment of the invention, the narrow distal edge of the pilot tip comprises a central and rounded extrusion extending along the direction of the shaft.

The extrusion is adapted to form an ideal contact point with the deepest bone structure, to allow easy maneuvering of the implant over the deepest bone structure, however, with the extrusion remaining small (preferably seen from a lateral perspective as being a continuation of the form of the pilot tip itself, as can be seen in the Figures). Given the smaller lateral dimension of the extrusion with respect to the distal edge, the extrusion will find the osteotomy even easier, with the broader distal edge then following up on the extrusion once it is already inserted somewhat into the osteotomy.

In a preferred embodiment of the invention, the intermediate zone of the shaft has a diameter lower than the outer diameter of the second zone of the shaft, and preferably also than the outer diameter of the first zone of the shaft. Even more preferably, the intermediate zone has a diameter lower than the inner diameter (without screw thread) of the second zone and/or of the first zone of the shaft as well.

One of the problems with many of the prior art embodiments, is that the intermediate, smooth zone of the shaft is as thick or even thicker than the second zone of the shaft, often even as thick or thicker than the first zone as well. This greatly hinders the practitioner when manipulating the dental implant, as the first, shallowest, osteotomy has a thickness to accommodate the shaft of the second zone, leaving little wiggle room once the second zone has passed through and the intermediate zone is extended through said first osteotomy. While the practitioner searches the deepest osteotomy, it is necessary to be able to pivot the dental implant somewhat in the first osteotomy, which is near impossible or at least greatly hindered with the existing dental implants. By providing a thinner intermediate zone, the practitioner can easily manipulate and pivot the dental implant with the first osteotomy working as a fulcrum, when searching the deepest osteotomy.

In a preferred embodiment of the invention, the distal edge of the pilot tip has a thickness (width) of at most 100% of the diameter of the second zone, and at least 5% of the diameter of the second zone, preferably with a thickness of at most 75% of the diameter of the second zone, more preferably of at most 55% of the diameter of the second zone, and preferably at least 10% of the diameter of the second zone and more preferably at least 15% of the diameter of the second zone.

It is to be considered that in some cases, for instance with a conical second zone, it is hard to define a radius or diameter of this second zone. In these cases, the term 'radius' or 'diameter' is to be understood as an average radius or diameter of the second zone. This would however be without screw thread.

The advantage of such a configuration is that the distal edge can easily enter the deepest osteotomy. Once the dental implant is inserted up to the second zone, the practitioner will feel the resistance of the osteotomy against the thicker second zone, thereby receiving the signal that he or she can commence to screw the implant into the osteotomy. By having a broad enough distal edge, this can be more easily used to securely determine the positioning of the tip in the osteotomy, making sure that the central axis of the dental implant lines up with the central axis of the osteotomy as well. Aside from this, other advantages may exist depending on the embodiment, such as providing sharpened lateral edges to perform some finer manipulations of the deepest osteotomy, as mentioned before.

Note that the thickness of the distal edge preferably is at most 65% of the diameter of the second zone, more preferably at most 60% of the diameter of the second zone, even more preferably at most 55% or even 50%, 45%, 40%, 35%, 30%, 25% of the diameter of the second zone. As a lower boundary, the thickness of the distal edge preferably is at least 5% but more preferably at least 10%, 15%, 20% or more of the diameter of the second zone. These boundaries will on the one hand ensure that the distal edge is narrow enough to allow the pilot tip to be used as a reconnaissance tool for finding the (visually obscured) deepest osteotomy, while remaining thick enough (preferably blunted or rounded) to be slid across the deepest bone structure easily and without damage.

In a preferred embodiment of the invention, the pilot tip laterally diverges from the distal edge towards the second zone, preferably in a smooth, continuous manner. As mentioned before, in case of abrupt transitions, this can cause the dental implant to 'jump' when pushed further into the osteotomy, or create too much resistance that the dental implant will not simply follow through and slide into the osteotomy, but could break or otherwise damage parts of the bone structure. A smooth transition will allow the practitioner to insert the dental implant more easily, while still retaining the tactile experience as the implant is inserted, specifically signaling that the implant is in position to be screwed into the bone structure.

In a preferred embodiment of the invention, the second zone with the screw thread is self-tapping. The advantages of such an adaptation speak for themselves.

In a preferred embodiment of the invention, the intermediate zone is dimensioned lengthwise to span the sinus cavity of a patient. In an optional embodiment, the dental implants are dimensioned specifically to the needs of the patient, for instance based on (CT) images or scans of the patient's jaw and bone structure. This is especially so for longitudinal dimensions (length of intermediate zone, first zone, second zone, etc.), as the sinus cavity will differ between patients, as well as the thicknesses of the bone structures (both shallowest as well as deepest). Generally, the length of the entire dental implant can be considered to lie between 15 mm and 40 mm, but more preferably, it will lie between about 18 mm and 30 mm, for instance 19 mm, 20 mm, 21 mm, 22 mm, 23 mm, 24 mm, 25 mm, 26 mm, 27 mm, 28 mm or 29 mm, or values therein between.

In a preferred embodiment, the dental implant has a varying radius. The intermediate zone preferably has a radius comprised between about 2.5 mm and 5 mm, more preferably between about 2.8 mm and 4.7 mm, and even more preferably between about 3.0 mm and 3.6 mm. The second zone (screw thread included) preferably has a radius comprised between 2.5 and 5 mm, more preferably between about 3 mm and 4.7 mm, even more preferably between about 3.15 mm and 4.4 mm, and most preferably about 4.0 mm. The first zone (again anchoring means included) has a radius comprised between about 3 mm and 6 mm, more preferably between about 3.7 mm and 5.3 mm, even more preferably between about 4.85 mm and 5.15 mm, and most preferably about 5.0 mm. The pilot tip has a lateral width (measured across the broader dimension of the pilot tip) comprised between about 1.7 mm and 4.7 mm, preferably between about 1.9 mm and 3.6 mm, more preferably between about 2.1 mm and 3.0 mm, and most preferably about 2.2 mm. Preferably, all transitions between zones of a different radius are gradual and smooth. Preferably, the pilot tip has a thickness (measured across the thinner dimension of the pilot tip) comprised between 0.05 mm and 1 mm or up to 1.5 mm, for instance 0.2 mm, 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm. It is of course obvious for the person skilled in the art to modify the radii of the first and second zone to the needs of the patient, and said person skilled in the art will readily understand that the advantage of the pilot tip will still be maintained.

The pilot tip preferably extends over at least 0.3 mm, more preferably over at least 0.35 mm or even 0.4 mm, 0.45 mm, 0.5 mm, 0.6 mm, 0.7 mm, 0.8 mm, 0.9 mm, 1 mm or more. The applicant noted however that the pilot tip even more preferably extends over at least 1.1 mm, 1.2 mm, 1.3 mm, 1.4 mm, 1.5 mm, 1.6 mm, 1.7 mm, 1.8 mm, 1.9 mm, 2.0 mm, 2.2 mm, 2.4 mm or more. Note that this is the distance along the longitudinal axis that the first plane of the pilot tip extends parallel to the central (or longitudinal) axis. The length of the pilot tip is of course dependent on the specific shape of the distal end of the second zone of the implant.

In an alternative embodiment however, the dental implant may have a generally constant radius.

In a preferred embodiment of the invention, the implant is a pterygoid implant.

In a different aspect, the invention concerns a dental implant with an improved tip for finding an osteotomy, and correctly aligning the implant with said osteotomy. The implant according to this aspect will be especially suited for 'blind' procedures, where the location of the osteotomy is obstructed from the view of the practitioner.

The dental implant according to this aspect comprises a an elongate shaft with a first and second end, whereby the first end is adapted for receiving an abutment head or a prosthetic work-piece, and the shaft comprising a zone provided with screw thread at the second end, potentially extending over even more than half the length of the shaft to the first end, preferably even further. The dental implant comprises a pilot tip on the second end, which pilot tip comprises a distal edge, preferably narrow, said edge being formed by at least one substantially flat plane of the pilot tip with said at least one plane being essentially parallel to the elongate shaft. Note that many, if not all, of the embodiment discussed for the dental implant according to the first aspect of the invention, may be easily applied to the dental implant according to this aspect, and the advantages discussed will of course still apply.

In a preferred embodiment, the length of the first zone is smaller than the length of the second zone. This way, it is ensured that the first zone is not yet inserted in the most shallow osteotomy when the second zone is at first inserted in the deepest osteotomy.

In a preferred embodiment, the shaft extends along a central axis, whereby at least part of the at least one plane lies substantially closer to the central axis than any part of the second zone lies to the central axis.

In a preferred embodiment, the transition of the zone with screw thread to the pilot tip, and specifically to the at least one plane defining the distal edge of the pilot tip, is continuous.

In a preferred embodiment, the pilot tip is connected to the zone with screw thread via a transition zone which gradually diverges to the radius of said second zone at least on the side of the flat plane.

In a preferred embodiment, the narrow distal edge of the pilot tip is laterally broadened to form a chisel-like structure.

In a preferred embodiment, the pilot tip comprises sharp lateral edges adapted for cutting into osseous structures.

In a preferred embodiment, the narrow distal edge of the pilot tip is blunted, preferably rounded.

In a preferred embodiment, the narrow distal edge is further defined by a second plane of the pilot tip, with said second plane being essentially parallel to the elongate shaft, and joining said first plane at the distal edge.

In a preferred embodiment, the narrow distal edge is further defined by a second plane of the pilot tip, with said second plane being obliquely positioned with respect to the elongate shaft, and joining said first plane at the distal edge.

In a preferred embodiment, the narrow distal edge of the pilot tip comprises a central and rounded extrusion extending along the direction of the shaft.

In a preferred embodiment, the distal edge of the pilot tip has a thickness of at most 100% of the inner diameter of the zone with screw thread (not considering the screw thread), and at least 5% of inner the diameter of said zone, preferably with a thickness of at most 70% of the inner diameter of said zone, more preferably of at most 55% of the inner diameter of said zone, and preferably at least 10% of the inner diameter of said zone and more preferably at least 15% of the inner diameter of said zone.

In a preferred embodiment, the pilot tip laterally diverges from the distal edge towards the zone with screw thread, preferably in a smooth, continuous manner.

In a preferred embodiment, the zone with the screw thread is self-tapping.

The invention is further described by the following non-limiting examples which further illustrate the invention, and are not intended to, nor should they be interpreted to, limit the scope of the invention.

The present invention will be now described in more details, referring to examples that are not limitative.

### Examples

### Example 1: Dental implant

Figure 1 and Figure 2 show a possible embodiment of the dental implant (embedded in osseous zones at the first and second end). Note that none of the dimensions, be it absolute or relative to each other, should be considered as restricting, as the Figures do not show an exact representation of the dental implants of the invention. As can be seen, the implant comprises 4 distinct zones, an apical end of the implant with a second zone (2) of screw thread (4), a back end of the implant with a first zone (1) of anchoring means (5), in this case a screw thread, and an intermediate, smooth zone (3) separating the apical (2) and back end (1). On the distal end of the apical zone (2) of the implant, a pilot tip (6) is provided. As can be seen in Figure 1, the pilot tip (6) is laterally broadened and diverges as it transitions into the apical zone (2) of the dental implant. Furthermore, a rounded extrusion (11) may also be provided on the extremal end of the pilot tip (6) with which the deepest bone structure (7) can be explored while searching for the deepest osteotomy (12) without damaging it or the tissue near to said bone structure. The lateral view on Figure 2 then clearly shows the parallel plane defining the distal edge of the pilot tip (6), and the sharpened lateral edges (10) of the pilot tip (6) with which the bone structure may be further manipulated.

Figures 3A-D and 4A-B show a number of possible embodiments for the pilot tip (6), both from a frontal view (Figures 3A-D) as from a lateral view (Figures 4A-B). It is to be understood that combinations may be easily made of any embodiment shown in the superior view with any shown in the lateral view.

### Example 2: Placement of dental implant

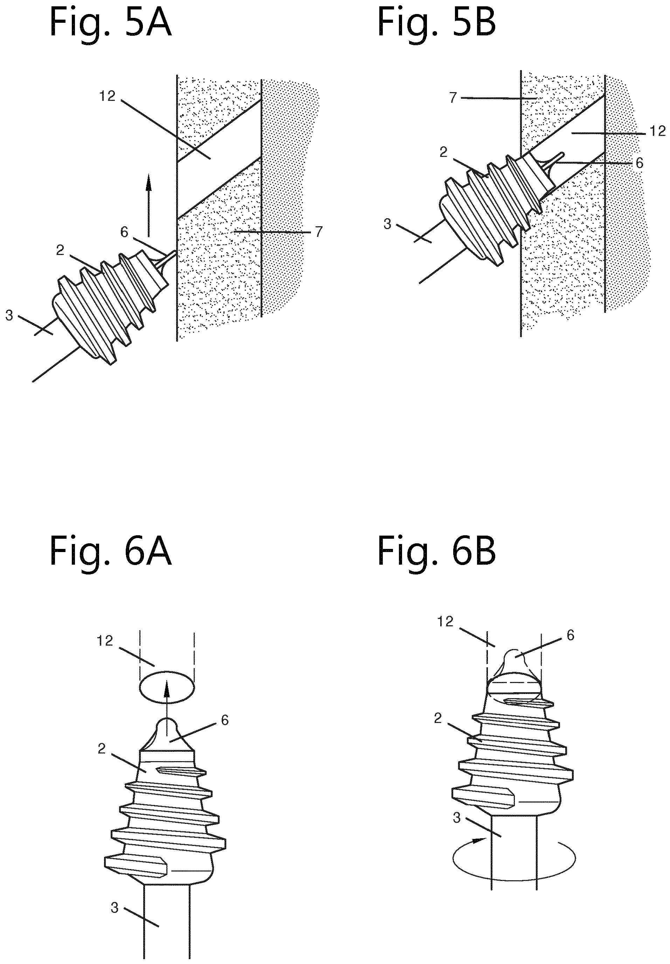

Figures 5A-B and 6A-B show the movement of the dental implant when the practitioner attempts to find the position of the deepest osteotomy (12). In this case, the shallowest osteotomy is not shown, but the person skilled in the art will understand that the dental implant is led through this osteotomy with the smooth intermediate zone (3).

In the left Figure 5A, one can see the dental implant moving with its pilot tip (6) against the posterior wall (14) of the sinus cavity (9), which together with the pterygoid process (15) of the sphenoid bone forms the second bone structure, in which a prior osteotomy (12) was already made. One can see that the plane defining the distal edge of the pilot tip (6), parallel to the shaft, is oriented downwards (although in this case, the distal edge is defined by two such parallel planes). The practitioner will move the pilot tip (6) upwards until he or she finds the deepest osteotomy (12), as can be seen in the right Figure 5B, at which point the pilot tip (6) will be inserted into the deepest osteotomy (12) until the zone (2) with screw thread (4) reaches the lower edge of the osteotomy, causing a feedback sensation to be felt by the practitioner, who is alerted that the dental implant may be screwed in further into the deepest osteotomy (12). Note that while inserting the pilot tip (6) into the osteotomy, or further on, the practitioner may better shape the deepest osteotomy (12) and remove possible bone obstructions via the sharp lateral edges (10) of the pilot tip (6).

Figures 6A-6B show this from a frontal point of view, with the pilot tip (6) moving from a lower position upwards against the posterior wall (14) of the maxillary sinus (or any other bone wherein the deepest osteotomy (12) is made) until it finds the osteotomy (12), at which point the practitioner may use the sharpened lateral edge (10) to remove further debris from the osteotomy (12).

The Figures 5A-B and 6A-B may also be interpreted as the invention in the broader sense of the second aspect of the invention concerning a dental implant with an improved pilot tip (6), without an intermediate zone (3).

### Example 3: Positioning of dental implant

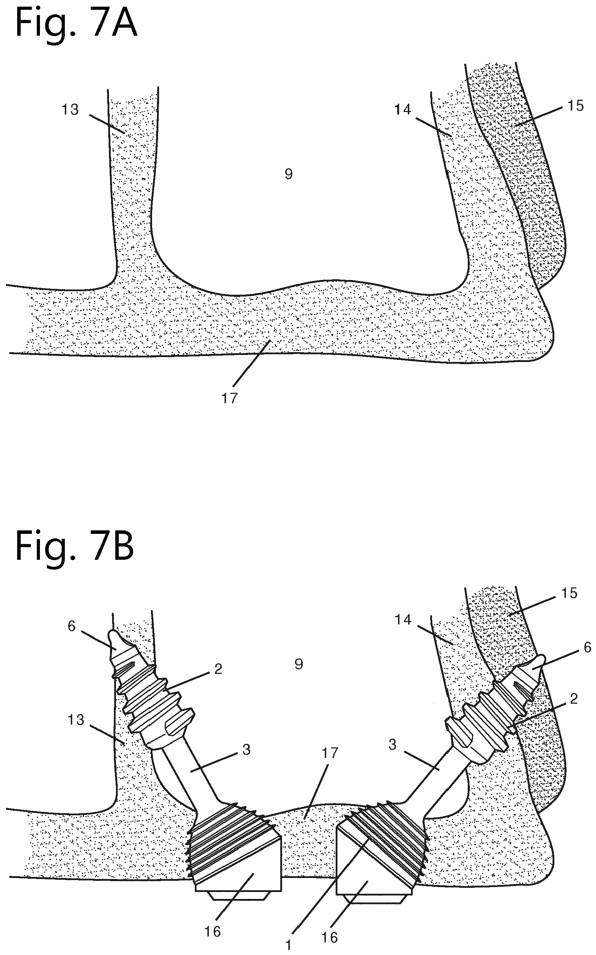

Figures 7A-B show the position of the dental implant when used as a pterygoid implant and lateral nasal wall implant. Note that the implant may similarly be used as a zygomatic implant. The implant can be seen to traverse the sinus cavity (9) with an intermediate zone (3), while being embedded in both the jaw bone (8, 17) as well as in the posterior wall of the maxillary sinus (14) and the pterygoid bone (15) or in the lateral nasal wall (13). Additionally, the angulation of the implant with the posterior wall of the maxillary sinus (14) and the pterygoid bone (15) and lateral nasal wall (13) is clear from this point of view, and will generally lie around 45°. An abutment head (16) is provided on the implants as well, which can receive a prosthetic work-piece.

### Example 4: Positioning of dental implant

The applicant furthermore wishes to observe that the basic embodiment of the dental implant according to the invention does not necessarily need to have a pilot tip (6) with a broadened edge, as it may simply have a cylindrical or tubular or even a (truncated) slightly conical shape, which is thinner (in radius) than the distal end from which it extends. The applicant noticed that this shape would fulfill the necessities the practitioner is faced with during implantation procedures. Such a pilot tip (6) would necessarily have edges (essentially) parallel to the longitudinal axis of the dental implant, thereby ensuring that it will be inserted into the osteotomy, thus guiding the dental implant into the osteotomy (12) entirely, and reducing the danger of the dental implant missing the osteotomy (12). This embodiment can be seen in Figure 9A and 9B for instance, whereby the pilot tip (6) can be considered as radially symmetric. Note that Figures 9A and 9B can also apply to embodiment of the dental implant that do have a broadened distal edge of the pilot tip (6).

It is supposed that the present invention is not restricted to any form of realization described previously and that some modifications can be added to the presented example of fabrication without reappraisal of the appended claims. For example, the present invention has been described mainly referring to pterygoid or zygomatic or lateral nasal wall implants, but it is clear that the invention can be applied to other implants than those.

## Claims

1. Dental implant comprising an elongate shaft comprising a first and a second end, whereby said first end is adapted for receiving an abutment head or a prosthetic work-piece, said shaft comprising at least one zone with a screw thread for endosseous anchoring,
**characterized in that** the shaft comprises a pilot tip on the second end, which pilot tip comprises a distal edge, preferably narrow, said edge being formed by at least one substantially flat plane of the pilot tip with said at least one plane being essentially parallel to the elongate shaft, said pilot tip preferably extending over at least 0.5 mm from said second end.

2. Dental implant comprising an elongate shaft comprising a first and a second end, whereby said first end is adapted for receiving an abutment head or a prosthetic work-piece, said shaft comprising at least one zone with a screw thread for endosseous anchoring,
**characterized in that** the shaft comprises an elongate, preferably cylindrical or truncated conical, pilot tip on the second end, extending over at least 0.3 mm, preferably over at least 0.5 mm, from said second end essentially parallel to the elongate shaft, and whereby said pilot tip has a radius of at most 70% of the radius of the second zone, preferably with a thickness of at most 55% of the radius of the second zone, more preferably of at most 40% of the radius of the second zone and even more preferably at most 30% of the radius of the second zone.

3. Dental implant according to any of the preceding claims 1 or 2, said elongate shaft comprising a first zone provided with anchoring means, preferably screw thread and/or surface enhancement, for anchoring in a bone structure, and furthermore the shaft comprising a second zone provided with screw thread at the second end for endosseous anchoring, said first zone extending substantially around the shaft near the first end, and whereby said second zone with screw thread and said first zone with anchoring means are separated by an intermediate zone with an essentially smooth surface for extraosseous placement.

4. Dental implant according to the preceding claim 3, whereby the shaft extends along a central axis, whereby at least part of the at least one plane lies substantially closer to the central axis than any part of the second zone lies to the central axis, and preferably whereby said pilot tip extends along the central axis.

5. Dental implant according to any one of the preceding claims 3 or 4, whereby the pilot tip is connected to the second zone via a transition zone which gradually diverges to the radius of the second zone at least on the side of the flat plane.

6. Dental implant according to any one of the preceding claims 3 to 5, whereby the narrow distal edge of the pilot tip is laterally broadened to form a chisel-like structure, preferably whereby said chisel-like structure comprises sharp lateral edges adapted for cutting bone structure.

7. Dental implant according to any one of the preceding claims 3 to 6, whereby the pilot tip comprises sharp lateral edges adapted for cutting into osseous structures.

8. Dental implant according to anyone of the preceding claims 3 to 7, whereby the narrow distal edge of the pilot tip is blunted, preferably rounded.

9. Dental implant according to any one of the preceding claims 3 to 8, whereby the narrow distal edge is further defined by a second plane of the pilot tip, with said second plane being essentially parallel to the elongate shaft, and joining said first plane at the distal edge.

10. Dental implant according to any one of the preceding claims 3 to 8, whereby the narrow distal edge is further defined by a second plane of the pilot tip, with said second plane being obliquely positioned with respect to the elongate shaft, and joining said first plane at the distal edge.

11. Dental implant according to any one of the preceding claims 3 to 10, whereby the narrow distal edge of the pilot tip comprises a central and rounded extrusion extending along the direction of the shaft.

12. Dental implant according to any one of the preceding claims 3 to 11, whereby the intermediate zone of the shaft has a diameter lower than the outer diameter of the second zone of the shaft, and preferably also than the outer diameter of the first zone of the shaft.

13. Dental implant according to any one of the preceding claims 3 to 12, whereby the distal edge of the pilot tip has a thickness of at most 70% of the diameter of the second zone, and at least 5% of the diameter of the second zone, preferably with a thickness of at most 55% of the diameter of the second zone, more preferably of at most 40% of the diameter of the second zone, and preferably at least 10% of the diameter of the second zone and more preferably at least 15% of the diameter of the second zone.

14. Dental implant according to any one of the preceding claims 3 to 13, whereby the pilot tip laterally diverges from the distal edge towards the second zone.

15. Dental implant according to any one of the preceding claims 3 to 14, whereby the implant is a pterygoid implant.
